# EUROPEAN PATENT APPLICATION

(11) **EP 2 359 929 A1**
(43) Date of publication of application: **24.08.2011**
(21) Application number: 10153319.8
(22) Date of filing: 11.02.2010
(51) Int. Cl.: B01J 13/04

(54) **System for producing microcapsules and use thereof**

(71) Applicant: Universidad de Salamanca, 37008 Salamanca (ES)
(72) Inventor: Martin Del Valle, Eva María, 37008 Salamaca (ES); Galan Serrano, Miguel Angel, 37008 Salamanca (ES); Perez Herrero, Edgar, 37008 Salamanca (ES)
(74) Representative: Pons Ariño, Angel

(57) **Abstract**

A system for producing small size microcapsules regardless of the viscosity of the material used. Said system is suitable for producing biocompatible microcapsules by avoiding the use of high temperatures and/or solvents during the process of production.

## Description

### OBJECT OF THE INVENTION

The main object of the present invention relates to the field of microencapsulation techniques, specifically to a biocompatible system and method for producing microcapsules without any viscosity limitation.

Microcapsules obtained by the above mentioned system and method comprise an active material enclosed in a polymer matrix, surrounded by a semipermeable membrane.

### BACKGROUND OF THE INVENTION

Microencapsulation is the process by which an active material is enclosed in a polymer matrix, surrounded by a semi-permeable membrane. Microcapsules have a number of interesting advantages and the main reasons for microencapsulation can be exemplified as controlled release, protection of the encapsulated materials against oxidation or deactivation due to reaction in the environment, masking of odour and/or taste of encapsulating materials, isolation of encapsulating materials from undesirable phenomena, and easy handling as powder-like materials.

Most methods of microencapsulation involve one of two harsh conditions (contact with an organic solvent and/or heating during processing) which usually is a problem, especially for biomaterials handling. For example, microencapsulation by coacervation of oppositely charged gelatines may involve the use of either formaldehyde or heat to cross-link the gelatine. The production of poly (d, Ilactide) and poly (glycolic acid) microspheres by solvent removal techniques involves the use of organic solvents such as methylene chloride and hexafluoroacetone sequihydrate to dissolve the polymers. Albumin microspheres involve the use of glutaraldehyde solution and/or heat (which can be as high as 130°C) to stabilize the microspheres. Chitosan microcapsules by spray-drying process involves the use of heat (between 110 and 180°C) to evaporate the solvent, and by a liquid coagulating process based on spray that involves the use of acetic anhydride and heat of an oven during one hour.

The previous work done on microencapsulation without harsh conditions produce capsules with diameters ranged between 300-1000 microns. For example, microcapsules prepared by spinning disk atomization, in which the fluid break-up is induced by a rotating disk, have sizes ranging from 300 to 600 µm. Other sample is the alginate beads produced by a vibrating nozzle device. This type of device produce capsules with diameters within the range 300-600 µm. Other technology used to encapsulation is the coaxial air-flow dropping that produces microcapsules within the range 400-800 µm. Yet another sample of encapsulation technology is the JetCutter technology, which is essentially based on rotating wires that cut falling jets. This technology produces capsules within the range 320-800 µm. Electrostatic droplet generation produces microcapsules by an electrostatic pulse generator within the range 300-800 µm.

A new method based on a microfluidics device, that use the extrusion technique through a silicon micro-nozzle array and a lateral soybean oil flow, have achieved reduce the diameter of the capsules up to 162 µm.

Among the main applications of encapsulation, one of the most promising is the immobilization of cells, tissues or enzymes in polymeric structures with semipermeable membranes; in order to achieve the cell therapy, that is, replace partially or totally, tissues or organs damaged or dysfunctional. The inclusion of cells therapeutically active within capsules ensures both, the mechanical protection and the immune-isolation of the graft. The semi-permeable membrane of the capsules allows the entry of nutrients and oxygen, and the exit of waste.

Although, the immobilization of cells has been successfully used in different therapeutic applications, there are some diseases, i.e., multiple sclerosis, pulmonary emphysema, which requires a reduced size of capsules, below 50 microns, to its administration via injection Hamilton and aerosol.

Alginate is a water soluble linear polysaccharide derived from brown algae, and composed of alternating blocks of 1-4 linked α-L-guluronic and β-D-mannuronic acid residues. Alginates have an excellent biocompability and biodegradability.

Probably, the most important property of alginates is their ability to form gels by reaction with divalent cations such as calcium or barium by binding between guluronic acid blocks in alginate and the divalent cations. Although the biocompability and biodegradability of alginates are extensively documented, there is not a described technology that reports the production of alginate capsules with a size below 50 microns with no limitations of viscosity. The viscosity of the polymer is a very important factor in the cell therapy, because controls the release kinetics of the cells that segregate different therapeutic factors or growth factors that permits the treatment of the diseases. It is necessary to used high values of the viscosity of the polymer to achieve the desired release. Also, the viscosity is a very important factor to other applications because it allows controlling de deformation of the capsules, but also the mechanical strength of the membrane of the capsules.

Then, it is needed the development of some technology that permit the generation of biocompatible capsules with a size below 50 microns.

### DESCRIPTION OF THE INVENTION

The object of the invention describes a system and method for generating capsules based on air-blast atomization with no viscosity limitation for encapsulation of any product or application, preferably biomedical applications to the treatment of some important diseases but also industrial applications, i.e., intelligent textiles, cosmetics, drug delivery, etc.

In the context of the present specification, the term "medicament" refers to any substance or combination of substances which may be used in or administered to mammals or human beings either with a view to restoring, correcting or modifying physiological functions by exerting a pharmacological, immunological or metabolic action, or for making a medical diagnosis.

As defined here, an "active substance", "pharmaceutically active substance", "active ingredient", "active pharmaceutical ingredient" or "therapeutic ingredient" refers to any substance or mixture of substances intended to furnish pharmacological activity or other direct effect in the diagnosis, cure, mitigation, treatment, or prevention of disease or medical condition, or to affect the structure and the function of the body.

Ionic gelation consists of the suspension of the active material that will be encapsulated in a water polianion solution, which usually is a polysaccharide, i.e., sodium alginate, and then the mixture is stabilized by adding dropwise into a water solution of cations, i.e., barium chloride, producing a semi-permeable membrane with the adequate characteristics in terms of pore size and mechanical strength. The microbeads produced are kept five minutes under the crosslinked conditions and a continuous agitation and, finally, collected by filtration with nylon filters.

The ionic gelation technique needs a technology that provides drops in the range required. A twin-fluid atomizer is preferably used to obtain capsules in the range between 10-50 microns. This type of atomizers, where low-speed liquid jets are accelerated by the surrounding high-speed gas flow, have minimal requirements for the liquid injection pressure and produce finer sprays. Particularly, a prefilmer airblast atomizer is preferably used, where the liquid is spread into a thin conical sheet before it is exposed to relatively small quantities of air flowing at high velocities on the inner and the outer side of the annular liquid sheet.

In order to achieve the above mentioned specifications the system of the invention mainly consists of the following parts:
- a pneumatic cabinet,
- a control panel,
- a junction box,
- a pressurized tank,
- an electronic pneumatic nozzle with external mix,
- a hardening solution.

General air is supplied from a pure air cylinder by means of a general air valve to the pneumatic cabinet, where it is electronically divided by means of a pressure switch into two different control lines:
- A first air line provides pressure to the pressurized tank to drive the liquid into the nozzle with no viscosity limitation. This line consists of a manual air pressure regulator, two air pressure gauges, and a proportional pressure regulator.
- A second air line provides air to the nozzle in order to produce the atomization that break the liquid jet. This line consists of an air pressure gauge, a proportional pressure regulator and a T-mass air flowmeter.

Both air lines are controlled since the control panel, that provide the total control of the liquid and air flow rates but also the air pressures. The initial pressure must be, at least, higher than the sum of the pressure of both lines.

This system permits that the liquid and air are totally independent because of the liquid is fed throughout the pressurized tank and not by means of suction. This permits working with no viscosity limitation.

Both the system and method of the invention, via ionic gelation, use only biocompatible materials with no added chemicals other than sodium alginate and barium chloride. The capsules generated with an air-blast atomizer have a size ranged between 10-50 microns.

The system of the invention allows the production of microcapsules of any polymer or any material suitable for said application, regardless of their viscosity since the pressurized tank acts as a plunger keeping the material at high pressure and pushing it, so no high temps are required in order to make the material flow to the spray nozzle. Consequently high viscosity solutions can be driven to the spray nozzle thanks to the use of the pressurized tank.

### DESCRIPTION OF THE DRAWINGS

In order to complement the description being made and with the purpose of helping towards a better understanding of the characteristics of the invention, in accordance with a preferred example of practical embodiment thereof, a set of drawings is attached as an integral part of said description, wherein the following, in an illustrative and non-limitative character, has been represented:

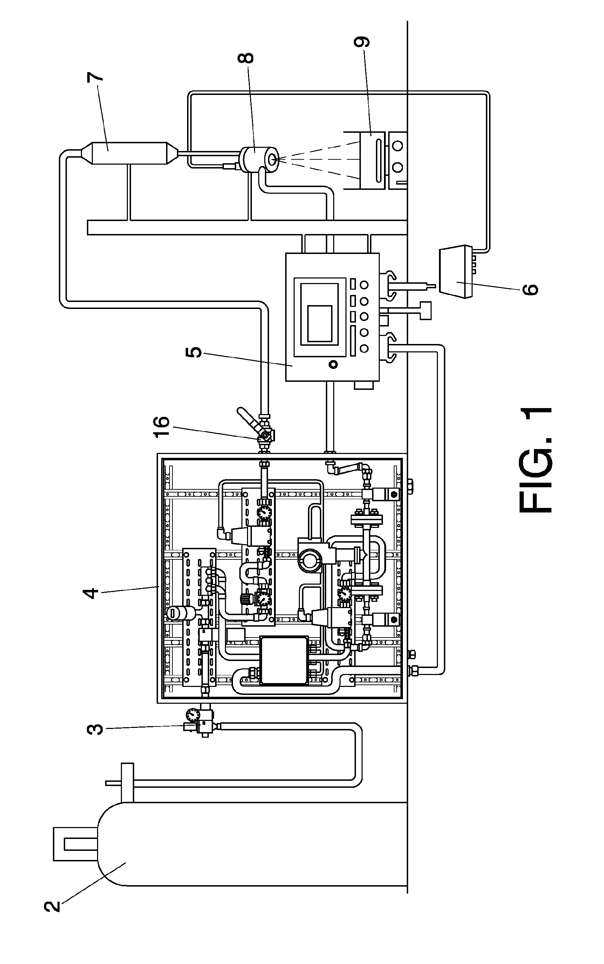

Figure 1.- Depicts a diagram of the system and its parts.

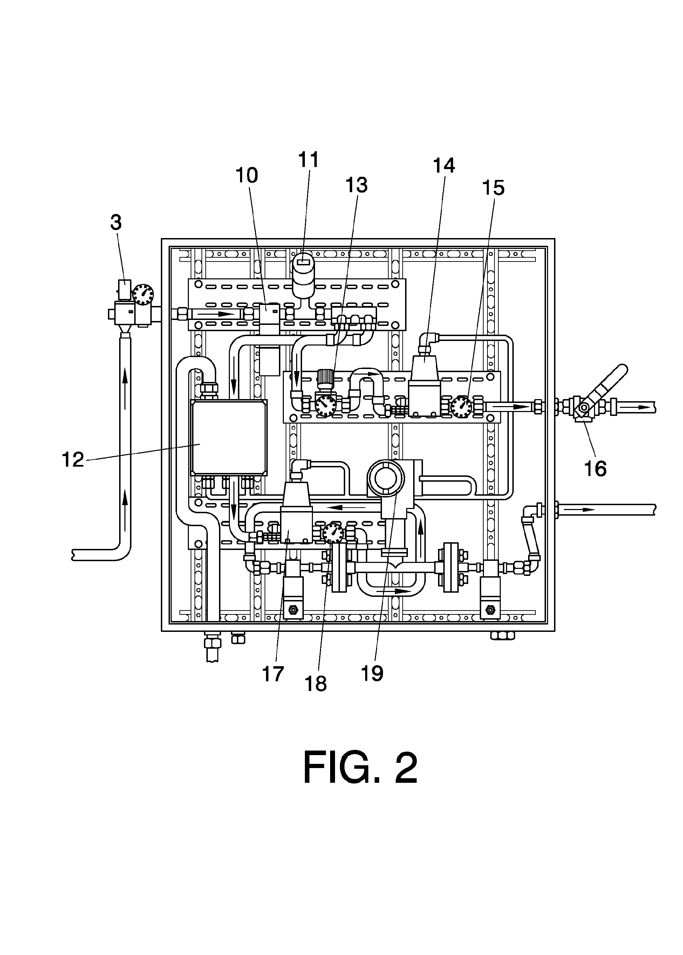

Figure 2.- Depicts a diagram of the pressure chamber and its parts.

### PREFERRED EMBODIMENT OF THE INVENTION

In view of the figures, several embodiments of the system object of this invention are described.

Firstly an specific amount, not relevant for the object of the invention, of powder sodium alginate reactive was diluted in distilled water reaching a concentration (162.8 cp), 1.1% by weight concentration ratio getting a solution of sodium alginate.Secondly a specific amount, not relevant for the object of the invention, of BaC1₂ 2H₂O was also diluted in distilled water getting a concentration ratio of 2%

The system takes Air from an Air source (2) in this preferred embodiment said source (2) is a pure Air container. Said Air is introduced to a pneumatic chamber (4), powered by electrical means (12), actuating a general valve (3), the Air is introduced at high pressure since said Air will feed two different lines, a tank line and an atomizing line; therefore the initial pressure shall be at least higher than the sumo of the pressures of the Air flowing through both lines earlier mentioned.

Air is pumped inside the pneumatic chamber (4) through the valve (3) and an air filter (10) and is then divided in the above mentioned two lines, the tank line and the atomizing line. Said two lines are separated and controlled by a pressure switch (11), the tank line provides air to the pressurized tank (7) whilst the atomizing line supplies air to an electronic nozzle (8).

Said pressure switch (11) is connected to a control panel (5) which controls the air flow and the condition of the air filter. Pressure and flows are controlled by different elements, in order to create the pressure needed inside the pressurized tank (7) the system (1) comprises a manual pressure gauge (13) a mechanical pressure indicator (15) and a first proportional pressure regulator (14), said proportional pressure regulator(14) is connected to the control panel (5) so the air flow and pressure are controlled by operating the control panel (5) until the desired pressure inside the pressurized tank (7) is reached. Additionally the system (1) comprises, in this tank line, a first internal digital sensor and a security valve (16), aid valve can be used to cut the supply of air to the pressurized tank (7) if needed.

The atomizing line is connected to a second proportional pressure regulator (17) and a flowmeter (19), both respectively connected to the control panel (5) allowing the accurate regulation of both flow and pressure of the Air used for atomizing the sodium alginate solution. Additionally the system (1) comprises, in this atomizing line, a second internal digital sensor and a mechanical pressure gauge (18).

The pressurized tank (7) is loaded with the above mentioned solution of sodium alginate, said pressurized tank (7) is connected to line carrying air coming from a pneumatic cabinet (4), said air creates a high pressure atmosphere inside the pressurized tank (7) pushing the sodium alginate solution to an electronic nozzle (8).

The control panel (5) supplies power to the pneumatic cabinet (4) and is further connected to a junction box (6) allowing the direct control of the electronic nozzle (8) which is fed with both Air, from the atomizing line, and sodium alginate solution, from the pressurizing tank (7), in order to spray said solution into a container (9) filled with hardening solution.

In this preferred embodiment the control panel is directly operated by the user, but it can also be furnished with communications means allowing the remote control of the system (1) or programmable devices allowing a delayed operation mode.

## Claims

1. System (1) for producing microcapsules **characterised by** comprising:
- an air source (2) containing air,
- a pneumatic cabinet (4) connected to said air source (2) for creating a tank air line and an atomizing air line,
- a pressurized tank (7) partially filled with a water-based solution connected to said tank air line,
- an electronic nozzle (8) connected to the atomizing air line to produce an atomization of said water-based solution, and
- a control panel (5) for controlling the pneumatic cabinet (4) and the electronic nozzle (8).

2. System (1) according to claim 1 wherein the pneumatic cabinet (4) comprises
- a pressure switch (11) connected to the control panel for splitting the air into the tank air line and the atomizing air line,
- power means (12) connected to the control panel (5) for providing energy to the pneumatic cabinet (4),
- a manual pressure gauge (13), a mechanical pressure indicator (15) and a first proportional pressure regulator (14) located along the tank air line and connected to the control panel (5) for controlling the air flow and pressure until the desired pressure in the pressurized tank (7) is reached, and
- a second proportional pressure regulator (17), a mechanical pressure gauge (18) and a flowmeter (19) located along the atomizing air line and connected to the control panel (5) for supplying air to the air nozzle (8) to produce the atomization.

3. System (1) according to claim 2 wherein the pneumatic cabinet (4) further comprises digital sensors for acquiring data related to pressure, temperature, and/or flow.

4. System according to any of the precedent claims wherein the pressurized tank (7) contains water-based solution and air, coming from the tank air line, to push said solution though the electronic nozzle (8).

5. System (1) according to any of the precedent claims further comprising a general valve (3) located between the air source (2) and the pneumatic cabinet (4) for controlling the inflow of air inside the pneumatic cabinet (4).

6. System (1) according to claim 1 wherein the pneumatic cabinet further comprises a filter (10) for filtering the air coming from the air source (2).

7. System according to claim 1 wherein the air source (2) is selected from the group consisting of an air container, an air balloon, an air pipe, an air cylinder or an air tank.

8. System (1) according to claim 1 wherein the air is pure air.

9. System (1) according to claim 1 further comprising a container (9) filled with hardening solution located in relation to the electronic nozzle (8) for hardening the atomized water-based solution.

10. System (1) according to claim 8 wherein the water-based solution hyalurinate, alginate, chitosan, or mixtures wherein the cation is selected from the Group consisting of lithium, sodium, potassium, calcium, barium, iron, copper, magnesioum, cadmium, and strontium.

11. System (1) according to any of the precedent claims wherein the control panel (5) further comprises a programmable device for allowing a remote control or delayed operating modes.

12. System (1) according to any of the precedent claims wherein the control panel (5) further comprises communication means for allowing connections to other electronic devices.

13. System (1) according to any of the precedent claims further comprising a junction box (6) linked to the control panel (5) for connecting said control panel (5) to the electronic nozzle (8).

14. Use of the microcapsules produced using the system described by claims 1-13 as container of a medical product.

15. Use of the microcapsules produced using the system described by claims 1-13 as container of at least an active substance.

16. Use of the microcapsules produced using the system described by claims 1-13 as container of biological material.
